# FASCICULE DE BREVET EUROPEEN

(11) **EP 1 496 470 B1**
(45) Date de publication et mention de la délivrance du brevet: **14.11.2012**
(21) Numéro de dépôt: 04300437.3
(22) Date de dépôt: 09.07.2004
(51) Int. Cl.: G06K 19/07, G06K 7/00

(54) **Carte à puce bi-mode**
Kombi-Chipkarte
Dual-mode chip card

(30) Priorité: 09.07.2003 FR 0350311
(43) Date de publication de la demande: 12.01.2005
(73) Titulaire: STMICROELECTRONICS S.A., 92120 Montrouge (FR)
(72) Inventeur: CONRAUX, Jérôme, 13530, TRETS (FR); RIZZO, Pierre, 13100, AIX EN PROVENCE (FR)
(74) Mandataire: de Beaumont, Michel

(56) Documents cités:
- EP-A- 1 179 806
- US-A- 5 206 495
- US-A1- 2002 177 407
- US-B1- 6 168 083
- US-B1- 6 565 007

## Description

La présente invention concerne le domaine des cartes à puce dites bi-mode, c'est-à-dire qui sont susceptibles d'établir une communication avec une borne de lecture-écriture par l'intermédiaire de contacts physiques ainsi que par l'intermédiaire d'un couplage inductif via une antenne.

On connaît du brevet américain US 6 168 083 une carte à puce bi-mode, capable de fonctionner soit dans un mode par contacts, soit dans un mode sans contacts. Ce document prévoit de sélectionner une session de communication de type sans contact si une tension alternative est induite dans l'antenne et une session de fonctionnement par l'intermédiaire des contacts physiques avec une borne de lecture-écriture, en l'absence d'une telle tension alternative et si une tension continue est présente sur les contacts physiques prévus à cet effet. La carte à puce est pourvue de deux interfaces, respectivement de mode sans contact et de mode à contacts, avec une mémoire de la carte, ainsi que de circuits de sélection d'une de ces interfaces. En fait, les circuits de la carte à puce sont activés dès qu'un niveau de tension d'alimentation suffisant est détecté par un circuit de détection de niveau, et l'interface sans contact est sélectionnée si un autre détecteur détecte la présence d'une tension alternative aux bornes de l'antenne.

Un inconvénient du système prévu par ce document est qu'il n'autorise pas un basculement d'un fonctionnement à contacts vers un fonctionnement sans contact au cours d'une même session de fonctionnement, c'est-à-dire lorsque le circuit de sélection a sélectionné l'une des interfaces. Il faut alors attendre une réinitialisation du système pour, le cas échéant, autoriser un basculement par une nouvelle phase de détection.

Un autre inconvénient du système décrit par le document susmentionné est que le régulateur linéaire nécessaire pour le fonctionnement en mode sans contact introduit une dissipation d'énergie même dans le cas d'un fonctionnement avec une alimentation par contacts physiques.

Il serait souhaitable, dans une carte à puce bi-mode, d'autoriser un basculement d'un fonctionnement à contacts vers un fonctionnement sans contact au cours d'une même session de communication. Une telle fonctionnalité trouve un intérêt tout particulier dans le cas de cartes à puce couplées à des dispositifs portables possédant une batterie. Dans un tel cas, le besoin de réinitialiser une session de communication avec la puce peut imposer une intervention de l'utilisateur pour un basculement vers un mode de fonctionnement sans contact. Par exemple, dans une application aux téléphones portables, une puce électronique d'une carte à puce contenant des informations personnelles de l'utilisateur est par défaut dans un fonctionnement à contacts avec le reste du téléphone portable. Cette puce pourrait être associée à un fonctionnement sans contact, par exemple pour autoriser le passage de tourniquets automatiques de transport en commun au moyen de la même puce. Une telle application n'est pas envisageable avec les systèmes connus car cela obligerait l'utilisateur à couper une communication téléphonique pour réinitialiser la carte à puce et autoriser alors une sélection vers un mode de fonctionnement sans contact.

La présente invention vise à proposer une carte à puce bi-mode qui pallie les inconvénients de solutions connues. Plus particulièrement, l'invention vise à proposer une carte à puce bi-mode qui soit susceptible de commuter d'un fonctionnement à contacts vers un fonctionnement sans contact au cours d'une même session de communication.

L'invention vise également à proposer une solution qui soit compatible avec les miniaturisations recherchées des cartes à puce.

L'invention vise en outre à proposer une solution particulièrement simple à mettre en oeuvre.

Pour atteindre ces objets et d'autres, la présente invention prévoit une carte à puce bi-mode selon la revendication 1.

Selon un mode de réalisation de la présente invention, le circuit de commande central exploite les résultats d'un détecteur de présence de signaux radiofréquence sur l'antenne pour sélectionner un mode de fonctionnement sans contact ou un mode de fonctionnement à contacts.

Selon un mode de réalisation de la présente invention, en présence d'une excitation radiofréquence et en l'absence de tension d'alimentation par les contacts physiques, on entame une session de fonctionnement sans contact jusqu'à une réinitialisation complète du système.

Selon un mode de réalisation de la présente invention, en l'absence d'une tension d'excitation radiofréquence et en présence d'une tension d'alimentation par contacts, le circuit de commande central désactive le régulateur et initie une communication par les plots à contacts, le détecteur de présence de signaux radiofréquence restant activé pour autoriser un passage vers un mode de fonctionnement sans contact à l'arrivée d'une éventuelle excitation radiofréquence.

Selon un mode de réalisation de la présente invention, la carte comprend en outre des moyens de transmission asynchrone directe entre un démodulateur des signaux reçus par l'antenne et au moins une borne d'entrée-sortie à contacts.

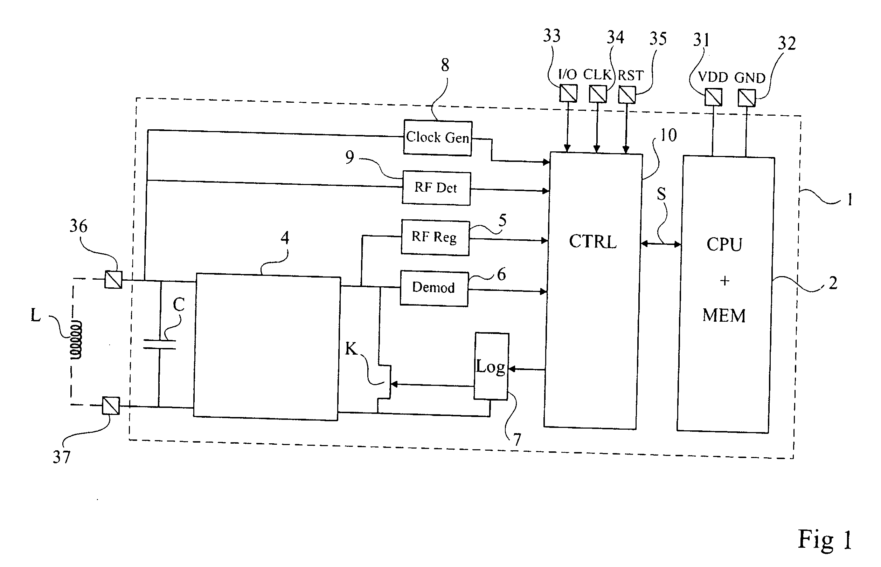

Ces objets, caractéristiques et avantages, ainsi que d'autres de la présente invention seront exposés en détail dans la description suivante de modes de réalisation particuliers faite à titre non-limitatif en relation avec la figure jointe qui représente, de façon très schématique et sous forme de blocs, un exemple de carte à puce bi-mode selon la présente invention.

Par souci de clarté, seuls les éléments nécessaires à la compréhension de l'invention ont été représentés à la figure et seront décrits par la suite. En particulier, les détails de fonctionnement des modes à contacts et sans contact n'ont pas été détaillés, l'invention s'appliquant à tous les modes de fonctionnement de cartes à puce sans contact (transpondeurs électromagnétiques) et de cartes à puce à contacts.

De façon classique, une carte 1 selon l'invention comprend une unité centrale de traitement ainsi que des éléments de mémorisation (bloc 2, CPU + MEM) correspondant à la fonction classique d'une carte à puce.

Le bloc 2 est connecté à deux plots 31 et 32 de la carte 1 destinés à recevoir une tension d'alimentation Vdd lorsque la carte est engagée dans un dispositif de lecture-écriture à contacts (non représenté). Le plot 31 est par exemple un plot d'alimentation positive Vdd tandis que le plot 32 est un plot de masse GND.

Dans l'exemple représenté, la carte à puce 1 comporte trois contacts additionnels 33, 34 et 35 destinés respectivement à remplir des fonctions d'entrée/sortie (I/O), d'amenée d'un signal d'horloge CLK depuis le lecteur et d'amenée d'un signal de réinitialisation RST depuis le lecteur à contacts.

S'agissant d'une carte à puce bi-mode, celle-ci comprend également deux plots 36 et 37 destinés à être raccordés aux bornes d'une antenne L dans un fonctionnement sans contact. Un condensateur C connecté aux bornes 36 et 37 est généralement intégré à la carte 1 et participe avec l'antenne L à la création d'un circuit résonant parallèle propre à être excité par un champ électromagnétique généré par une borne de lecture-écriture lorsque la carte 1 s'approche de la borne. Dans ce fonctionnement, la carte à puce 1 respecte les opérations prévues pour les transpondeurs électromagnétiques selon lesquels une porteuse (par exemple, à 13,57 MHz) de téléalimentation est modulée pour transmettre des données depuis une borne de lecture-écriture vers la carte à puce, et selon lesquels une transmission de la carte à puce vers la borne est effectuée par rétromodulation au rythme d'une sous porteuse (par exemple, à 847 kHz).

Pour permettre une démodulation des données reçues en mode sans contact ainsi qu'une téléalimentation de la carte, un pont redresseur 4 est généralement connecté par ses deux bornes d'entrée alternative aux plots 36 et 37. Côté sortie redressée du pont 4, une des bornes (par exemple positive) est connectée en entrée d'un régulateur 5 (RF Reg) par exemple linéaire, ainsi qu'en entrée d'un démodulateur 6 (Demod). Le régulateur 5 est chargé de fournir au reste de la carte la tension d'alimentation nécessaire à son fonctionnement lorsque ceci est téléalimenté par le champ électromagnétique d'une borne sans contact. Le démodulateur 6 est chargé de décoder les données transmises par la borne à destination du transpondeur.

Pour une transmission de données de la carte vers le lecteur, on utilise généralement un interrupteur K de rétromodulation commutant une charge entre les deux bornes de sortie redressées du pont 4 sous commande d'un bloc 7 (Log) recevant les données à transmettre. Enfin, un signal d'horloge de fonctionnement sans contact à destination du reste de la carte est extrait par un bloc 8 de génération d'horloge (Clock Gen) dont l'entrée est connectée sur l'un des plots 36 et 37.

Selon l'invention, la carte 1 comprend en plus un circuit 9 (RF Det) de détection de présence d'une excitation radiofréquence sur l'antenne L pour détecter un besoin de passage en mode sans contact, ainsi qu'un circuit 10 (CTRL) de commande générale chargé non seulement de la sélection entre les deux modes de fonctionnement, mais également de la gestion de ce fonctionnement.

Selon l'invention, les sorties respectives du régulateur 5, du démodulateur 6, du générateur d'horloge 8 et du détecteur radiofréquence 9 sont envoyés sur des entrées du circuit de contrôle 10, de même que celui-ci est relié aux plots 33, 34 et 35 du fonctionnement à contacts. Par ailleurs, le circuit 10 fournit les signaux de données à destination du bloc 7 de rétromodulation et échange, avec le circuit 2 d'unité centrale, des signaux S de commande de données ainsi que d'alimentation provenant des bornes 31 et 32 dans le mode de fonctionnement à contacts. Bien que cela ne soit pas représenté, le circuit 10 échange des signaux avec les différents blocs de la carte si cela est requis par leurs structures respectives.

Une caractéristique de la présente invention est de n'utiliser le régulateur 5 que lors d'un fonctionnement sans contact. Comme l'illustre la figure, celui-ci est connecté en amont du circuit 10 de contrôle de sorte qu'il ne reçoit un signal à réguler que lorsqu'une tension radiofréquence est présente en fonctionnement sans contact. Le reste du temps, toute l'alimentation est fournie par la tension présente sur les bornes 31 et 32 et le régulateur 5 reste déconnecté. Dans un mode de réalisation simplifié du régulateur 5, il suffit que celui-ci ne reçoive pas de signaux en sortie du pont redresseur 4, sans qu'il soit nécessaire de prévoir de commutation.

Le circuit 10 gère les différents échanges de signaux de la façon suivante.

En présence d'une excitation radiofréquence uniquement de la carte à puce, c'est-à-dire alors qu'aucune tension d'alimentation n'arrive sur les contacts 31 et 32, la carte devient alimentée à la manière d'un transpondeur électromagnétique par le régulateur 5 en même temps qu'une excitation radiofréquence est détectée par le circuit 9 et qu'une horloge est extraite de l'excitation alternative par le bloc 8. La carte 1 fonctionne alors en mode sans contact en étant autoalimentée par le champ radiofréquence et les commutations s'effectuent par le canal radiofréquence exclusivement. Dans ce mode de fonctionnement, le circuit 10 isole les contacts 33, 34 et 35 pendant toute la session.

En présence d'une tension d'alimentation suffisante entre les bornes 31 et 32, cette tension d'alimentation est détectée par le circuit 10 qui se trouve alimenté. Si aucun signal radiofréquence n'est détecté par le bloc 9, cela signifie qu'on se trouve en présence de contacts raccordés sur la carte 1. On entame alors un fonctionnement à contacts et les communications s'effectuent par l'intermédiaire des plots 33 à 35. S'ils sont pourvus de signaux de commande appropriés, les blocs 5, 6, 7 et 8 sont mis en stand-by en veillant toutefois à ce que le détecteur radiofréquence 9 reste en service.

En l'absence de détection d'excitation radiofréquence par le circuit 9, le fonctionnement s'effectue exclusivement dans un mode à contacts de façon classique.

Toutefois, selon une caractéristique de l'invention, si durant cette session démarrée en mode à contacts, le détecteur 9 détecte la présence d'un signal radiofréquence, le bloc 10 qui en reçoit l'information active le démodulateur 6 afin d'être capable d'exploiter les signaux reçus par l'antenne. Le régulateur 5 reste cependant désactivé dans la mesure où l'alimentation est fournie par les contacts. Dès que le démodulateur 6 détecte une donnée, celle-ci est transmise par le bloc 10 à l'unité centrale 2. C'est ensuite le logiciel d'application qui sélectionne, en fonction des souhaits du programme d'application, si on doit fonctionner alors dans un mode à contacts ou sans contact.

En reprenant l'exemple d'application au passage de portillons automatiques, l'unité centrale peut alors traiter une brève interruption pour valider le passage du portillon sans pour autant faire perdre la communication, par exemple téléphonique, engagée grâce à une session à contacts avec le reste du téléphone mobile.

Le détecteur de signal radiofréquence 9 est, par exemple, un détecteur tel que décrit dans la demande de brevet européen 0 903 688 de la demanderesse.

Un avantage de la présente invention est qu'en prévoyant un régulateur commandable en amont du circuit de contrôle 10, on permet un basculement d'un fonctionnement à contacts vers un fonctionnement sans contact au cours d'une même session sans risquer de conflit d'alimentation entre les deux sources possibles (contacts 31 et 32, bornes d'antenne 36 et 37). En l'absence d'un tel circuit commandable comme c'est le cas notamment dans le brevet américain N° 6 168 083 susmentionné, il n'est pas possible de commuter d'un mode à l'autre au cours d'une même session faute de quoi l'alimentation radiofréquence risque de disparaître par l'alimentation externe par plots, ou inversement.

Selon une variante de réalisation, une carte à puce selon l'invention peut en outre être équipée d'un transmetteur asynchrone IART pour transmettre, sans transiter vers l'unité centrale 2, des données reçues sur le canal RF (démodulé par le bloc 6), vers le ou les plots d'entrée/sortie 33 en temps réel.

Bien entendu, la présente invention est susceptible de diverses variantes et modifications qui apparaîtront à l'homme de l'art. En particulier, la mise en oeuvre pratique du circuit de commande central 10 est à la portée de l'homme du métier à partir des indications fonctionnelles données ci-dessus. De plus, bien que l'invention ait été décrite en relation avec cinq plots d'entrée/sortie pour un mode de fonctionnement à contacts, celle-ci pourra comporter un nombre différent de contacts. En outre, on notera que si un exemple particulier a été décrit ci-dessus, l'invention s'applique à tous les types de fonctionnements et d'architectures de cartes à puce de type transpondeurs électromagnétiques et à tous les types de fonctionnements et d'architectures de cartes à puce à contacts.

## Revendications

1. Carte à puce (1) bi-mode comprenant plusieurs plots (31, 32, 33, 34, 35) de contacts physiques avec un lecteur externe et deux plots (36, 37) de connexion à une antenne (L) pour un fonctionnement sans contact, la carte comportant un régulateur de tension (5) apte à extraire d'une excitation radiofréquence parvenant sur l'antenne, une tension d'alimentation des circuits de traitement de la puce, **caractérisée en ce que** le régulateur est commandable par un circuit central (10) pour être désactivé en présence d'une tension d'alimentation sur des contacts de la puce, de sorte que la puce puisse être alimentée à partir des contacts lors d'un fonctionnement sans contact.

2. Carte à puce selon la revendication 1, dans laquelle le circuit de commande central (10) est adopté exploiter les résultats d'un détecteur (9) de présence de signaux radiofréquence sur l'antenne (L) pour sélectionner un mode de fonctionnement sans contact ou un mode de fonctionnement, à contacts.

3. Carte à puce selon revendication 1, adaptée de sorte que en présence d'une excitation radiofréquence et en l'absence de tension d'alimentation par les contacts physiques, on entame une session de fonctionnement sans contact jusqu'à une réinitialisation complète du système.

4. Carte à puce selon la revendication 3, adaptée de sorte que en l'absence d'une tension d'excitation radiofréquence et en présence d'une tension d'alimentation par contacts, le circuit de commande central (10) désactivé le régulateur (5) et initie une communication par les plots à contacts, le détecteur de présence de signaux radiofréquence (9) restant activé pour autoriser un passage vers un mode de fonctionnement sans contact à l'arrivée d'une éventuelle excitation radiofréquence.

5. Carte à puce selon la revendication 2, comprenant en outre de moyens de transmission asynchrone directs entre un démodulateur (6) des signaux reçus par l'antenne et au moins une borne (33) d'entrée-sortie à contacts.

## Claims

1. A dual-mode chip-card (1) comprising several pads (31, 32, 33, 34, 35) for a physical contact with an external reader and two pads (36, 37) for connection to an antenna (L) for a contactless operation, the card comprising a voltage regulator (5) capable of extracting from a radio frequency excitation reaching the antenna a supply voltage for the chip's processing circuits, **characterized in that** said regulator is controllable by a central circuit (10) to be deactivated in the presence of a supply voltage on contacts of the chip, so that the chip can be powered by the contacts during a contactless operation.

2. The chip-card of claim 1, wherein the central control circuit (10) is adapted to use the results of a detector (9) of the presence of radio frequency signals on the antenna (L) to select a contactless operating mode or a contact operating mode.

3. The chip-card of claim 1, adapted so that, in the presence of a radio frequency excitation and in the absence of a supply voltage through the physical contacts, a contactless operating session is started until complete reset of the system.

4. The chip-card of claim 3, adapted so that, in the absence of a radio frequency excitation voltage and in the presence of a contact supply voltage, the central control circuit (10) deactivates the regulator (5) and initiates a communication through the contact pads, the detector (9) of the presence of the radio frequency signals remaining activated to provide switching to a contactless operating mode upon arrival of a possible radio frequency excitation.

5. The chip-card of claim 2, further comprising means of direct asynchronous transmission between a demodulator (6) of the signals received by the antenna and at least one input/output terminal (33) with contacts.

## Patentansprüche

1. Eine Dual-Mode Chipkarte die folgendes aufweist:
mehrere Anschlüsse (Pads) (31, 32, 33, 34, 35) für einen körperlichen oder physikalischen Kontakt mit einem externen Leser und zwei Anschlüssen (Pads) (36, 37) zur Verbindung mit einer Antenne (L) für einen kontaktlosen Betrieb, wobei die Karte folgendes aufweist:
einen Spannungsregler (5) der in der Lage ist aus einer Hochfrequenzerregung, die die Antenne erreicht, eine Versorgungsspannung für die Verarbeitungsschaltungen des Chips zu extrahieren, **dadurch gekennzeichnet, dass** der erwähnte Regler durch eine zentrale Schaltung (10) steuerbar ist, um bei Anwesenheit einer Versorgungsspannung an den Kontakten des Chips deaktiviert zu werden, sodass der Chip durch die Kontakte während eines kontaktlosen Betriebs mit Leistung versorgt werden kann.

2. Chipkarte nach Anspruch 1, wobei die zentrale Steuerschaltung (10) geeignet ist zur Verwendung der Ergebnisse eines Detektors (9) in der Anwesenheit von Hochfrequenzsignalen an der Antenne (L), um eine kontaktlose Betriebsart oder eine Kontaktbetriebsart auszuwählen.

3. Chipkarte nach Anspruch 1 geeignet, dass bei Anwesenheit einer Hochfrequenzerregung und in Abwesenheit einer Versorgungsspannung durch die körperlichen Kontakte eine kontaktlose Sezession oder eine kontaktlose Betriebsart gestartet wird, bis zur vollständigen Rücksetzung des Systems.

4. Chipkarte nach Anspruch 3 geeignet, dass bei Abwesenheit einer Hochfrequenzerregungsspannung und bei Anwesenheit einer Kontaktversorgungsspannung die zentrale Steuerschaltung (10) den Regler (5) deaktiviert und eine Verbindung durch die Kontaktanschlüsse initiiert, wobei der Detektor (9) des Vorhandenseins der Hochfrequenzsignale aktiviert bleibt, um eine Schaltung einer kontaktlosen Betriebsart bei Ankunft einer möglichen Hochfrequenzerregung vorzusehen.

5. Chipkarte nach Anspruch 2, die ferner Mittel aufweist zur direkten asynchronen Übertragung zwischen einem, die Signale durch die Antenne empfangenden Demodulator (6), und mindestens einem Eingangs/Ausgangsanschluss (33) mit Kontakten.
